(19) Europäisches Patentamt
European Patent Office
Office européen des brevets

(11) **EP 4 369 437 A1**

(12) **EUROPEAN PATENT APPLICATION**
published in accordance with Art. 153(4) EPC

(43) Date of publication:
**15.05.2024 Bulletin 2024/20**

(21) Application number: **22911890.6**

(22) Date of filing: **20.12.2022**

(51) International Patent Classification (IPC):
$H01M\ 4/1395^{(2010.01)}$    $H01M\ 4/1391^{(2010.01)}$
$H01M\ 4/36^{(2006.01)}$    $H01M\ 4/62^{(2006.01)}$
$H01M\ 4/38^{(2006.01)}$    $H01M\ 4/48^{(2010.01)}$
$H01M\ 4/134^{(2010.01)}$    $H01M\ 4/131^{(2010.01)}$
$H01M\ 10/052^{(2010.01)}$    $H01M\ 4/02^{(2006.01)}$

(52) Cooperative Patent Classification (CPC):
H01M 4/02; H01M 4/131; H01M 4/134;
H01M 4/1391; H01M 4/1395; H01M 4/36;
H01M 4/38; H01M 4/48; H01M 4/62; H01M 10/052;
Y02E 60/10

(86) International application number:
**PCT/KR2022/020888**

(87) International publication number:
**WO 2023/121257 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021 KR 20210185220**

(71) Applicant: **LG Energy Solution, Ltd.
Seoul 07335 (KR)**

(72) Inventors:
• **PARK, Su Jin
Daejeon 34122 (KR)**
• **LEE, Jaewook
Daejeon 34122 (KR)**

(74) Representative: **Hoffmann Eitle
Patent- und Rechtsanwälte PartmbB
Arabellastraße 30
81925 München (DE)**

(54) **ANODE COMPOSITION, ANODE COMPRISING SAME FOR LITHIUM SECONDARY BATTERY, LITHIUM SECONDARY BATTERY COMPRISING ANODE, AND METHOD FOR PREPARING ANODE COMPOSITION**

(57) The present invention relates to a negative electrode composition, a negative electrode for a lithium secondary battery including the same, a lithium secondary battery including a negative electrode, and a method of manufacturing a negative electrode composition.

[Figure 1]

**Description**

[Technical Field]

This application claims priority to and the benefit of Korean Patent Application No. 10-2021-0185220 filed with the Korean Intellectual Property Office on December 22, 2021, the entire contents of which are incorporated herein by reference.

The present invention relates to a negative electrode composition, a negative electrode for a lithium secondary battery including the same, a lithium secondary battery including a negative electrode, and a method of manufacturing a negative electrode composition.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the increase of the technological development and demand for mobile devices, the demand for secondary batteries is also sharply increasing as an energy source. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high-density energy batteries in recent years, researches are being actively conducted on a method for increasing a capacity by using a silicon-based compound such as Si/C or SiOx having a capacity greater than by a factor of 10 or more, in comparison with graphite-based materials, as a negative electrode active material. When compared to graphite that is typically used, the silicon-based compound that is a high-capacity material has a large capacity but undergoes rapid volume expansion during a charging process, thereby disconnecting a conductive path to degrade battery characteristics.

Accordingly, in order to address a problem occurring when the silicon-based compound is used as the negative electrode active material, a measure for controlling a driving potential, a measure for suppressing the volume expansion itself such as a method of further coating a thin film on an active material layer additionally and a method of controlling a particle diameter of a silicon-based compound, or various measures for preventing a conductive path from being disconnected have been discussed. However, the above measures may rather deteriorate the performance of a battery, and thus, the application thereof is limited, so that there is still a limitation in commercializing the manufacturing of a negative electrode battery having a high content of a silicon-based compound.

Therefore, there is a need for conducting researches on a silicon-based active material itself capable of preventing a conductive path from being damaged due to volume expansion of a silicon-based compound, even when the silicon-based compound is used as an active material in order to improve capacity performance.

CITATION LIST

(Patent Literature 1) Japanese Patent Application Publication No. 2009-080971

[Detailed Description of the Invention]

[Technical Problem]

The present invention relates to a negative electrode composition, a negative electrode for a lithium secondary battery including the same, a lithium secondary battery including a negative electrode, and a method of manufacturing a negative electrode composition.

[Technical Solution]

An exemplary embodiment of the present specification provides a negative electrode composition including a silicon-based active material; a negative electrode conductive material; and a negative electrode binder, in which the silicon-based active material includes one or more selected from the group consisting of $SiO_x$ (x=0) and $SiO_x$ (0<x<2), and includes 90 parts by weight or more of $SiO_x$ (x=0) on the basis of 100 parts by weight of the silicon-based active material, the silicon-based active material includes graphene, and the graphene has a structure of wrapping a surface of the silicon-based active material.

Another exemplary embodiment provides a method of manufacturing a negative electrode composition, the method including the steps of surface-treating a silicon-based active material; heat-treating graphite to form a graphene oxide; mixing and heat-treating the surface-treated silicon-based active material and the graphene oxide to form a graphene wrapping a surface of the silicon-based active material; and mixing the silicon-based active material, a negative electrode conductive material, and a negative electrode binder, in which the silicon-based active material includes one or more selected from the group consisting of $SiO_x$ (x=0) and $SiO_x$ (0<x<2) and includes 90 parts by weight or more of $SiO_x$ (x=0) on the basis of 100 parts by weight of the silicon-based active material.

Still another exemplary embodiment provides a negative electrode for a lithium secondary battery including a current collector layer; and a negative electrode active material layer including the negative electrode composition according to the present application and formed on one surface or both surfaces of the current collector layer.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode composition according to the exemplary embodiment of the present invention uses the silicon-based active material, which is a high-capacity material, so as to manufacture a high-capacity battery. At this time, characteristics of the silicon-based active material itself are adjusted, rather than adjusting the characteristics of the conductive material and the binder according to the volume expansion of the silicon-based active material. In particular, for the silicon-based active material, pure silicon including one or more selected from the group consisting of $SiO_x$ (x=0) and $SiO_x$ (0<x<2), and including 90 parts by weight or more of $SiO_x$ (x=0), on the basis of 100 parts by weight of the silicon-based active material is used.

The negative electrode composition according to the present application includes a high content of pure silicon-based active material to obtain a high-capacity and high-density negative electrode, and at the same time, wraps the silicon-based active material itself with the graphene so as to solve problems such as volume expansion due to the high content of pure silicon-based active material. Accordingly, the negative electrode including the negative electrode composition has such features that can solve the volume expansion problem of the silicon-based active material and utilize the advantages of the silicon-based active material.

That is, when compared to the case of using a conventional silicon-based active material, the present invention has the silicon-based active material of a specific content and uses the specific surface-treated silicon-based active material, and can minimize the volume expansion during charging and discharging by using the negative electrode composition according to the present invention.

[Brief Description of Drawings]

FIG. 1 shows a laminated structure of a negative electrode for a lithium secondary battery according to an exemplary embodiment of the present application.
FIG. 2 shows a laminated structure of a lithium secondary battery according to an exemplary embodiment of the present application.

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mini II of BEL Japan. That is, in the present application, the BET specific surface area may mean the specific surface area measured by the above measurement method.

In the present specification, "Dn" means a particle diameter distribution, and means a particle diameter at the n% point in the cumulative distribution of the number of particles according to the particle diameter. That is, D50 is a particle diameter (average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle diameter distribution may be measured using a laser diffraction method. Specifically, powders to be measured are dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, a molecular weight means a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including a silicon-based active material; a negative electrode conductive material; and a negative electrode binder, in which the silicon-based active material includes one or more selected from the group consisting of SiOx (x=0) and SiOx (0<x<2), and includes 90 parts by weight or more of SiOx (x=0) on the basis of 100 parts by weight of the silicon-based active material, the silicon-based active material includes graphene, and the graphene has a structure of wrapping a surface of the silicon-based active material.

The negative electrode composition according to the present application includes a high content of pure silicon-based active material to obtain a high-capacity and high-density negative electrode, and at the same time, wraps the silicon-based active material itself with the graphene so as to solve problems such as volume expansion due to the high content of pure silicon-based active material. Accordingly, the negative electrode including the negative electrode composition has such features that can solve the volume expansion problem of the silicon-based active material and utilize the advantages of the silicon-based active material.

The graphene according to the present application is included in a structure form of wrapping a surface of the silicon-based active material. In general, this may be different from the concept of coating the surface of the silicon-based active material with graphene. When the surface of the general silicon-based active material is coated with graphene, since the graphene is physically coupled to the surface of the silicon-based active material, the graphene may also undergo volume expansion as the volume of the silicon-based active material changes, so that the graphene may be broken. However, the graphene according to the present application is included in a structure form of wrapping the surface of the silicon-based active material, and therefore, the graphene is maintained despite the volume expansion of the silicon-based active material.

In the exemplary embodiment of the present application, there is provided the negative electrode composition in which the silicon-based active material includes one or more selected from the group consisting of SiOx (x=0), and SiOx (0<x<2), and includes 90 parts by weight or more of SiOx (x=0), on the basis of 100 parts by weight of the silicon-based active material.

In another exemplary embodiment, on the basis of 100 parts by weight of the silicon-based active material, SiOx (x=0) may be included in amount of 90 parts by weight or more, preferably 92 parts by weight or more, and more preferably 95 parts by weight or more, and 100 parts by weight or less, preferably 99 parts by weight or less, and more preferably 97 parts by weight or less.

In the exemplary embodiment of the present application, the silicon-based active material may include a metal impurity, and in this case, the metal impurity is general metal that may be included in the silicon-based active material, and the content thereof may be 1 part by weight or less, and preferably 0.1 part by weight or less on the basis of 100 parts by weight of a total of the silicon-based active material.

In the exemplary embodiment of the present application, the silicon-based active material may particularly use pure silicon (Si) as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

The silicon-based active material according to the present application includes 90 parts by weight or more of SiOx (x=0) on the basis of 100 parts by weight of the silicon-based active material. When compared with a silicon-based active material in which a SiOx (0<x<2)-based active material is used as a main material, the theoretical capacity thereof is much lower than that of the silicon-based active material of the present application. That is, if a SiOx (0<x<2)-based active material is used, even when the silicon-based active material itself is treated in any way, it is not possible to implement conditions equivalent to the charging and discharging capacities of the silicon-based active material of the present invention.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed and used with a graphite-based active material.

Therefore, in the negative electrode composition according to the present invention, the graphene is formed to wrap the surface of the silicon-based active material as described above in order to solve the above problems while using only a pure silicon-based active material as a negative electrode active material in order to improve capacity performance. Accordingly, the main object of the present invention is to reduce the volume expansion of the silicon-based active material, and at the same time, to maintain conductivity on the surface, thereby improving electrode conductivity and solving the existing problems.

An average particle diameter (D50) of the silicon-based active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the binder in the negative electrode slurry, so that a possibility of continuing conductive network increases, thereby increasing the capacity retention. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In the exemplary embodiment of the present application, the silicon-based active material generally has a characteristic BET specific surface area. The BET specific surface area of the silicon-based active material is preferably 0.01 to 150.0 $m^2$/g, more preferably 0.1 to 100.0 $m^2$/g, particularly preferably 0.2 to 80.0 $m^2$/g, and most preferably 0.2 to 18.0 $m^2$/g. The BET specific surface area is measured in accordance with DIN 66131 (using nitrogen).

In the exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In the exemplary embodiment of the present application, there is provided the negative electrode composition in which the silicon-based active material is included in an amount of 60 parts by weight or more on the basis of 100 parts by weight of the negative electrode composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 85 parts by weight or less, on the basis of 100 parts by weight of the negative electrode composition.

The negative electrode composition according to the present application uses the specific surface coating capable of controlling the volume expansion rate during charging and discharging even when the silicon-based active material having a significantly high capacity is used within the above range. Accordingly, even when the silicon-based active material is included within the above range, the negative electrode composition does not degrade the performance of the negative electrode and has excellent output characteristics in charging and discharging.

In the exemplary embodiment of the present application, the silicon-based active material may have a non-spherical shape and its sphericity is, for example, 0.9 or less, for example, 0.7 to 0.9, for example 0.8 to 0.9, and for example 0.85 to 0.9.

In the present application, the sphericity (circularity) is determined by Formula 1, in which A is an area and P is a boundary line.

$$[\text{Equation 1}]$$

$$4\pi A/P^2$$

The surface of the silicon-based active material according to the present application has a shape wrapped by the graphene. In this case, the silicon-based active material itself is formed of a material including one or more selected from the group consisting of SiOx (x=0) and SiOx (0<x<2), and includes both cases where one or more particles selected from the group consisting of SiOx (x=0) and SiOx (0<x<2) included in the silicon-based active material each have a shape wrapped by graphene, and where secondary particles formed as a result of aggregation of one or more particles selected from the group consisting of SiOx (x=0) and SiOx (0<x<2) have a shape wrapped by graphene.

In the exemplary embodiment of the present application, the silicon-based active material may include one or more selected from the group consisting of SiOx (x=0), SiOx (0<x<2), SiC, and a Si alloy.

In the exemplary embodiment of the present application, a thickness of the graphene may satisfy a range of 1 nm or greater and 20 nm or less, preferably 5 nm or greater and 15 nm or less, and 10 nm or greater and 15 nm or less.

In the exemplary embodiment of the present application, there is provided the negative electrode composition in which the graphene is included in an amount of 0.1 part by weight or more and 10 parts by weight or less on the basis of 100 parts by weight of the silicon-based active material.

In another exemplary embodiment, the graphene may satisfy a range of 0.1 part by weight or more and 10 parts by weight or less, preferably 0.3 part by weight or more and 7 parts by weight or less, and more preferably 0.5 part by weight or more and 4.5 parts by weight or less, on the basis of 100 parts by weight of the silicon-based active material.

As the graphene is included as described above, on the basis of the silicon-based active material, the capacity per weight of the silicon-based active material can be maintained, rapid volume expansion of the silicon-based active material is reduced during charging and discharging, and at the same time, conductivity is maintained, thereby contributing to improvement in electrode conductivity.

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based compound, even when the characteristics of the silicon-based active material itself are adjusted as described above according to the present application, the volume may rapidly expand during the charging/discharging, thereby causing some problems of damaging the conductive path formed in the negative electrode active material layer.

Therefore, in the exemplary embodiment of the present application, the negative electrode conductive material may include one or more selected from the group consisting of a point-type conductive material, a planar conductive material and a linear conductive material.

In the exemplary embodiment of the present application, the point-type conductive material refers to a conductive material that may be used for improving conductivity of the negative electrode, has conductivity without causing a chemical change and has a point or spherical shape. Specifically, the point-type conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In the exemplary embodiment of the present application, the point-type conductive material may have a BET specific surface area of 40 m$^2$/g or greater and 70 m$^2$/g or less, preferably 45 m$^2$/g or greater and 65 m$^2$/g or less, and more preferably 50 m$^2$/g or greater and 60 m$^2$/g or less.

In the exemplary embodiment of the present application, a functional group content (volatile matter) of the point-type conductive material may satisfy a range of 0.01% or more and 1% or less, preferably 0.01% or more and 0.3% or less, and more preferably 0.01% or more and 0.1% or less.

In particular, when the functional group content of the point-type conductive material satisfies the above range, a functional group is present on a surface of the point-type conductive material, so that the point-type conductive material can be smoothly dispersed in a solvent when water is used as the solvent.

In the exemplary embodiment of the present application, the point-type conductive material having the functional group content within the range is included together with the silicon-based active material, and the functional group content can be adjusted according to a degree of heat treatment of the point-type conductive material.

That is, in the fabrication of the point-type conductive material, a high functional group content may mean a lot of foreign substances, and a low functional group content may mean that more heat treatments have been performed.

In order to satisfy the range of the functional group content, the point-type conductive material according to the present application may be partially heat-treated to satisfy the functional group content range.

Specifically, as the dispersibility of the point-type conductive material is improved, even when the content of the point-type conductive material is increased in the negative electrode slurry having the same solid content, the viscosity of the negative electrode slurry can be maintained at an appropriate level, so that processability is stable and uniformity of the negative electrode to be formed can be improved.

In the exemplary embodiment of the present application, the particle diameter of the point-type conductive material may be 10 nm to 100 nm, preferably 20 nm to 90 nm, and more preferably 20 nm to 60 nm.

In the exemplary embodiment of the present application, the conductive material may include a planar conductive material.

The planar conductive material refers to a conductive material that improves conductivity by increasing surface contact between silicon particles in the negative electrode and at the same time serves to suppress disconnection of the conductive path due to the volume expansion. The planar conductive material may be expressed as a plate-like conductive material or a bulk-type conductive material.

In the exemplary embodiment of the present application, the planar conductive material may include at least one selected from the group consisting of plate-like graphite, graphene, graphene oxide, and graphite flakes, and preferably may be plate-like graphite.

In the exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In the exemplary embodiment of the present application, there is provided the negative electrode composition in which the planar conductive material has D10 of 0.5 um or greater and 1.5 um or less, D50 of 2.5 um or greater and 3.5 um or less and D90 of 7.0 um or greater and 15.0 um or less.

In the exemplary embodiment of the present application, for the planar conductive material, a planar conductive material with a high specific surface area having a high BET specific surface area or a planar conductive material with a low specific surface area may be used.

In the exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In the exemplary embodiment of the present application, the planar conductive material may have a BET specific surface area of 5 $m^2$/g or greater.

In another exemplary embodiment, the planar conductive material may have a BET specific surface area of 5 $m^2$/g or greater and 500$m^2$/g or less, preferably 5 $m^2$/g or greater and 300 $m^2$/g or less, and more preferably 5 $m^2$/g or greater and 250 $m^2$/g or less.

In another exemplary embodiment, the planar conductive material is a planar conductive material with a high specific surface area, and the BET specific surface area may satisfy a range of 50 $m^2$/g or greater and 500 $m^2$/g or less, preferably 80 $m^2$/g or greater and 300 $m^2$/g or less, and more preferably 100 $m^2$/g or greater and 300 $m^2$/g or less.

In another exemplary embodiment, the planar conductive material is a planar conductive material with a low specific surface area, and the BET specific surface area may satisfy a range of 5 $m^2$/g or greater and 40 $m^2$/g or less, preferably 5 $m^2$/g or greater and 30 $m^2$/g or less, and more preferably 5 $m^2$/g or greater and 25 $m^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side or entangled in such an orientation that longitudinal axes of the carbon nanotube units are substantially the same. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may include SWCNT or MWCNT.

In the exemplary embodiment of the present application, there is provided the negative electrode composition in which the negative electrode conductive material is included in an amount of 10 parts by weight or more and 40 parts by weight or less on the basis of 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less, on the basis of 100 parts by weight of the negative electrode composition.

In the exemplary embodiment of the present application, there is provided the negative electrode composition in which the negative electrode conductive material includes a planar conductive material and a linear conductive material.

In the exemplary embodiment of the present application, there is provided the negative electrode composition in which the negative electrode conductive material includes a planar conductive material and a linear conductive material, the negative electrode conductive material includes 90 parts by weight or more and 99.99 parts by weight or less of the planar conductive material, and 0.01 part by weight or more and 10 parts by weight or less of the linear conductive material, on the basis of 100 parts by weight of the negative electrode conductive material.

In another exemplary embodiment, the negative electrode conductive material may include 90 parts by weight or more and 99.99 parts by weight or less, preferably 93 parts by weight or more and 99.9 parts by weight or less, and more preferably 95 parts by weight or more and 99.9 parts by weight or less of the planar conductive material on the basis of 100 parts by weight of the negative electrode conductive material.

In another exemplary embodiment, the linear conductive material may be included in an amount of 0.01 part by weight or more and 10 parts by weight or less, preferably 0.1 part by weight or more and 7 parts by weight or less, and more preferably 0.1 part by weight or more and 5 parts by weight or less on the basis of 100 parts by weight of the negative electrode conductive material.

In particular, in the exemplary embodiment of the present application, as the negative electrode conductive material includes the planar conductive material and the linear conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving a buffer at the time of roll-pressing, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and are completely different from the negative electrode conductive material that is applied together with the silicon-based active material as in the present invention, in terms of configuration and role.

In the exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

In the exemplary embodiment of the present application, the planar conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed and used into a spherical or point-type shape so as to facilitate storage and release of lithium ions.

On the other hand, the planar conductive material that is used as the negative electrode conductive material is a material having a plane or plate shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in the exemplary embodiment of the present application, artificial graphite or natural graphite, which is a carbon-based active material, may have a BET specific surface area that satisfies a range of 0.1 $m^2/g$ or greater and 4.5 $m^2/g$ or less. In addition, plate-like graphite, which is a planar conductive material, has a planar shape, and a BET specific surface area thereof may be 5 $m^2/g$ or greater.

The negative electrode binder according to an exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, a water-based binder may be used, and more specifically, a PAM-based binder may be used.

In the exemplary embodiment of the present application, the negative electrode binder may be included in an amount of 30 parts by weight or less, preferably 25 parts by weight or less, more preferably 20 parts or less, and 5 parts by weight or more, and 10 parts by weight or more, on the basis of 100 parts by weight of the negative electrode composition.

An exemplary embodiment of the present application provides a method of manufacturing a negative electrode composition, the method including the steps of surface-treating a silicon-based active material; heat-treating graphite to form a graphene oxide; mixing and heat-treating the surface-treated silicon-based active material and the graphene oxide to form a graphene wrapping a surface of the silicon-based active material; and mixing the silicon-based active material, a negative electrode conductive material, and a negative electrode binder, in which the silicon-based active material includes one or more selected from the group consisting of SiOx (x=0) and SiOx (0<x<2) and includes 90 parts by weight or more of SiOx (x=0) on the basis of 100 parts by weight of the silicon-based active material

In the method of manufacturing a negative electrode composition, each composition included in the negative electrode composition may be the same as described above.

Graphene can generally be produced by interlayer exfoliation or deposition of graphite, and has no surface defect or functional group. However, when forming graphene as described above, it is difficult to secure graphene because it is necessary to perform a complicated process. Therefore, in the present case, a graphene wrapping the surface of the silicon-based active material may be formed by oxidizing graphite to form a graphene oxide and mixing and heat-treating the surface-treated silicon-based active material and the graphene oxide.

That is, while the graphene having a structure of wrapping the surface of the silicon-based active material may be formed through the above method, the deposition method forms a structure in which graphene is coated on the surface of the silicon-based active material.

In the exemplary embodiment of the present application, there is provided the method of manufacturing a negative electrode composition including steps of, after the step of mixing the silicon-based active material, the negative electrode conductive material, and the negative electrode binder, forming a negative electrode slurry by including a negative electrode slurry solvent in the mixture; and mixing the negative electrode slurry, in which the mixing step of the negative electrode slurry is performed at 2,000 rpm to 3,000 rpm for 10 minutes to 60 minutes.

In the exemplary embodiment of the present application, the negative electrode slurry may include a negative electrode composition, and a slurry solvent.

In the exemplary embodiment of the present application, a solid content of the negative electrode slurry may satisfy a range of 5% or more and 40% or less. In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode composition is minimized to efficiently form the negative electrode active material layer.

In the exemplary embodiment of the present application, the negative electrode slurry including the negative electrode composition may be coated on one surface or both surfaces of the negative electrode current collector layer to form a negative electrode for a lithium secondary battery.

In the exemplary embodiment of the present application, the negative electrode slurry solvent may be used without limitation as long as it can dissolve and disperse the negative electrode composition, but specifically, water, ethanol or NMP may be used.

An exemplary embodiment of the present application provides a negative electrode for a lithium secondary battery including a negative electrode current collector layer; and a negative electrode active material layer including the negative electrode composition according to the present application and formed on one surface or both surfaces of the negative electrode current collector layer.

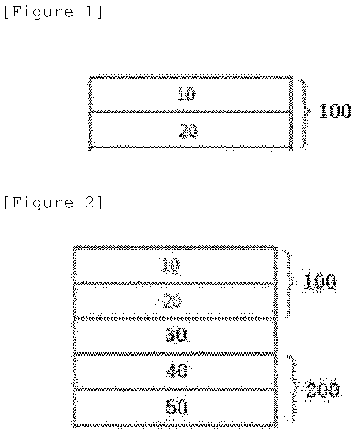

FIG. 1 shows a laminated structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface, but the negative electrode active material layer may be formed on both surfaces of the negative electrode current collector layer.

In the exemplary embodiment of the present application, the negative electrode current collector layer generally has a thickness of 1 um to 100 um. The negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In the exemplary embodiment of the present application, there is provided the negative electrode for a lithium secondary battery in which a thickness of the negative electrode current collector layer is 1 um or greater and 100 um or less and a thickness of the negative electrode active material layer is 20 um or greater and 500 um or less.

However, the thicknesses may be variously modified depending on a type and use of the negative electrode used, and are not limited thereto.

In the exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has appropriate ranges of electrical conductivity and resistance.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 shows a laminated structure of a lithium secondary battery according to an exemplary embodiment of the present application. Specifically, a negative electrode 100 for a lithium secondary battery including the negative electrode active material layer 20 on one surface of the negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

The secondary battery according to the exemplary embodiment of the present invention may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{2-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 um or greater.

For example, the average particle diameter (D50) of the single particles may be 1 um or greater and 12 um or less, 1 um or greater and 8 um or less, 1 um or greater and 6 um or less, greater than 1 um and 12 um or less, greater than 1 um and 8 um or less, or greater than 1 um and 6 um or less.

Even when the single particles are formed with a small average particle diameter (D50) of 1 um or greater and 12 um or less, the particle strength may be excellent. For example, the single particle may have a particle strength of 100 to 300 MPa when roll-pressing with a force of 650 kgf/cm$^2$. Accordingly, even when the single particles are roll-pressed with a strong force of 650 kgf/cm$^2$, a phenomenon where the number of micro-particles in an electrode is increased due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than that upon manufacturing the secondary particles. For example, when the composition of the precursor is the same, the firing should be performed at a temperature higher than that upon manufacturing the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material containing a lithium complex transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate of 30 or less primary particles, and the secondary particle may be an aggregate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 um to 20 um, 2 um to 17 μm, and preferably 3 um to 15 um. The specific surface area (BET) of the secondary particles may be 0.05 m$^2$/g to 10 m$^2$/g, preferably 0.1

$m^2/g$ to 1 $m^2/$ g, and more preferably 0.3 $m^2/g$ to 0.8 $m^2/g$.

In a further exemplary embodiment of the present application, the secondary particle is an aggregate of primary particles, and the average particle diameter (D50) of the primary particles is 0.5 um to 3 um. Specifically, the secondary particle may be an aggregate form of hundreds of primary particles, and the average particle diameter (D50) of the primary particles may be 0.6 um to 2.8 um, 0.8 um to 2.5 um, or 0.8 um to 1.5 um.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, a phenomenon where the number of micro-particles in an electrode is increased due to particle breakage is alleviated, thereby improving the lifetime characteristic of the battery.

In the exemplary embodiment of the present application, the average particle diameter (D50) of the single particles is smaller than the average particle diameter (D50) of the secondary particles by 1 um to 18 um.

For example, the average particle diameter (D50) of the single particles may be 1 um to 16 um smaller, 1.5 um to 15 um smaller, or 2 um to 14 um smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, a phenomenon where the number of micro-particles in an electrode is increased due to particle breakage is alleviated, thereby improving the lifetime characteristic and the energy density of the battery.

According to a further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are included in an amount of 15 parts by weight or more, a phenomenon where the number of micro-particles in an electrode is increased due to particle breakage in a roll-pressing process after fabrication of an electrode can be alleviated, thereby improving the lifetime characteristics of the battery.

In the exemplary embodiment of the present application, the lithium composite transition metal compound may further include secondary particles, and the secondary particles may be included in an amount of 85 parts by weight or less on the basis of 100 parts by weight of the positive electrode active material. The secondary particles may be included in an amount of 80 parts by weight or less, 75 parts by weight or less, or 70 parts by weight or less on the basis of 100 parts by weight of the positive electrode active material. The secondary particles may be included in an amount of 0 part by weight or more on the basis of 100 parts by weight of the positive electrode active material.

When the above range is satisfied, the above-described effects due to the existence the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used.

In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Example 1>**

**<Manufacturing of Negative Electrode>**

A Si active material having a D50 of about 5 $\mu$m was subjected to surface modification.

Graphite was oxidized to form a graphene oxide, and the surface-modified Si active material and the graphene oxide were mixed and heat-treated to form a graphene (rGO, reduced graphene oxide) wrapping the surface of the Si active material. In this case, the graphene satisfied 0.5 part by weight on the basis of 100 parts by weight of the Si active material.

The Si prepared above as an active material (graphene layer coating on 100% SiOx (x=0)), a plate-like graphite conductive material (average particle diameter of 3.5 um) as a first conductive material, SWCNT as a second conductive material, and acrylamide as a binder were added to distilled water as a solvent in a weight ratio of 79.5:10:0.5:10 to manufacture a negative electrode slurry.

Thereafter, a negative electrode active material layer was coated to have a thickness of 30 um on a Cu foil having a thickness of 15 $\mu$m, dried at 130°C for 12 hours, and roll-pressed to have a negative electrode porosity of 40%, so that a negative electrode was manufactured.

**<Example 2>**

A negative electrode was manufactured in the same manner as in Example 1, except that, in Example 2, the rGO (reduced graphene oxide) was added to satisfy 4.5 parts by weight on the basis of 100 parts by weight of the Si active material.

**<Example 3>**

A negative electrode was manufactured in the same manner as in Example 1, except that, in Example 3, the rGO (reduced graphene oxide) was added to satisfy 15 parts by weight on the basis of 100 parts by weight of the Si active material.

**<Example 4>**

A negative electrode was manufactured in the same manner as in Example 1, except that, in Example 4, the Si prepared above as an active material, point-type carbon black (Super-P) as a conductive material, and acrylamide as a binder were added to distilled water as a solvent in a weight ratio of 80:10:10 to manufacture a negative electrode slurry.

**<Comparative Example 1>**

A negative electrode was manufactured in the same manner as in Example 1, except that, in Comparative Example 1, a Si active material (Si 100%) not including graphene was used.

**<Comparative Example 2>**

A negative electrode was manufactured in the same manner as in Example 1, except that, in Comparative Example 2, a SiO active material was used.

**<Comparative Example 3>**

A Si active material having D50 of about 5 um was manufactured by coating graphene on the surface of the Si active material by forming an Ar (argon) gas atmosphere using N-hexane with the CVD (Chemical Vapor Deposition) method, and then a negative electrode was manufactured in the same manner as in Example 1.

**<Manufacturing of Secondary Battery (Coin Half-Cell)>**

A lithium secondary battery was manufactured by using a metal lithium foil having a thickness of 0.3 mm as the positive electrode, interposing a polyethylene separator between the positive electrode and the negative electrode in each of Examples and Comparative Examples, and injecting an electrolyte.

The electrolyte was obtained by adding vinylene carbonate to an organic solvent, in which fluoroethylene carbonate (FEC) and diethyl carbonate (DEC) were mixed in a volume ratio of 30:70, in an amount of 3 wt.% on the basis of a total weight of the electrolyte and adding $LiPF_6$ as a lithium salt to a concentration of 1M.

**<Experimental Example>**

**Experimental Example 1 Initial Efficiency Evaluation of Coin Half-Cell**

The first charge/discharge capacity and initial efficiency of the lithium secondary batteries manufactured in the Examples and Comparative Examples were evaluated using an electrochemical charger/discharger.

The capacities and efficiencies per gram of the coin half-cell batteries were respectively calculated under conditions of charging (0.1C CC/CV charging, 0.005 V, 0.005C cut) and discharging (0.1C CC discharging, 1.5 V cut), and the results are shown in Table 1 below.

**Experimental Example 2 Capacity Retention Evaluation of Coin Half-Cell**

The capacity retentions of the lithium secondary batteries including the negative electrodes of the Examples and Comparative Examples were evaluated using the electrochemical charger/discharger.

The numbers of cycles of the coin half-cell batteries until the capacity reached 80% were confirmed under conditions of charging (0.5C CC/CV charging, 0.005 V, 0.005C cut) and discharging (0.5C CC discharging, 1.0 V cut) .

The Nth capacity retention was evaluated by a following formula. The results are shown in Table 1 below.

capacity retention (%) = {(discharge capacity at Nth cycle) / (discharge capacity at first cycle)} $\times$ 100        [Formula]

[Table 1]

|  | Example 1 | Example 2 | Example 3 | Example 4 | Comparative Example 1 | Comparative Example 2 | Comparative Example 3 |
|---|---|---|---|---|---|---|---|
| Charge capaci ty (mAh/c m$^2$) | 3956 | 3754 | 4013 | 3965 | 3868 | 1640 | 3955 |
| Discha rge capaci ty (mAh/c m$^2$) | 3679 | 3410 | 3611 | 3648 | 3551 | 1230 | 3660 |
| Effici ency evalua tion (%) | 93 | 91.9 | 90 | 92.5 | 92.3 | 75 | 92.5 |
| Capaci ty | 97 | 95 | 95 | 93 | 91 | 99 | 94 |
| retent ion evalua tion (%, @3cycl e) |  |  |  |  |  |  |  |

As can be seen in Table 1, the negative electrode compositions of Examples 1 to 4 had a high content of pure silicon-based active material to obtain a high-capacity and high-density negative electrode, and at the same time, used graphene wrapping the silicon-based active material. Accordingly, it could be confirmed that the efficiency of the negative electrode including the negative electrode composition was calculated as having a high level as a result of the efficiency evaluation.

In addition, it could be confirmed that the capacity retentions of the negative electrodes of Examples 1 to 4 were maintained at a high level. This is because the silicon-based active material itself was wrapped with graphene to maintain the conductive path even when the silicon-based active material underwent volume expansion.

In the case of Comparative Example 1, the silicon-based active material was used and graphene was not included. It could be confirmed that although the initial efficiency was measured high as the silicon-based active material was used, as continuous charging and discharging cycles were repeated, the capacity retention was measured low because graphene capable of controlling the volume expansion was not included.

In the case of Comparative Example 2, SiO was used as the silicon-based active material, instead of SiOx (x=0), and the volume expansion rate was generally lower than that of SiOx (x=0). Therefore, it could be confirmed that the capacity retention was measured high, but the initial efficiency itself was low. That is, it could be confirmed that a high-capacity and high-density negative electrode, which is the object of the present invention, could not be secured when SiO was used as the negative electrode active material.

In the case of Comparative Example 3, the surface of a general silicon-based active material was coated with graphene, rather than wrapping the silicon-based active material with graphene as in the present application. In this case, since the graphene is physically coupled to the surface of the silicon-based active material, the graphene may also undergo volume expansion as the volume of the silicon-based active material changes, so that the graphene may be broken. As a result, it could be confirmed that the graphene was partially broken as the charging and discharging were repeated, and the capacity retention was lowered, as compared with Examples 1 to 3.

For reference, Examples 1 to 3 included the two types of the planar conductive material and the linear conductive material, and Example 4 included only the point-type conductive material. It could be confirmed that as Examples 1 to 3 included the specific conductive materials, the conductive path was maintained well and the capacity retention was measured higher. In addition, in Example 3, a higher amount of graphene than Examples 1, 2, and 4 was contained, and it could be confirmed that Examples 1, 2, and 4 were far superior in efficiency evaluation.

**Claims**

1.  A negative electrode composition comprising:

    a silicon-based active material;
    a negative electrode conductive material; and
    a negative electrode binder,
    wherein the silicon-based active material comprises one or more selected from the group consisting of $SiO_x$ (x=0) and $SiO_x$ (0<x<2), and comprises 90 parts by weight or more of $SiO_x$ (x=0) on the basis of 100 parts by weight of the silicon-based active material, and
    wherein the silicon-based active material comprises graphene, and the graphene has a structure of wrapping a surface of the silicon-based active material.

2.  The negative electrode composition of claim 1,
    wherein the silicon-based active material is included in an amount of 60 parts by weight or more on the basis of 100 parts by weight of the negative electrode composition.

3.  The negative electrode composition of claim 1,
    wherein the negative electrode conductive material comprises one or more selected from the group consisting of a point-type conductive material, a planar conductive material and a linear conductive material.

4.  The negative electrode composition of claim 3,

    wherein the negative electrode conductive material comprises a planar conductive material and a linear conductive material, and
    wherein the negative electrode conductive material comprises 90 parts by weight or more and 99.99 parts by weight or less of the planar conductive material, and 0.01 part by weight or more and 10 parts by weight or less of the linear conductive material, on the basis of 100 parts by weight of the negative electrode conductive material.

5.  The negative electrode composition of claim 1,
    wherein the graphene is included in an amount of 0.1 part by weight or more and 10 parts by weight or less on the basis of 100 parts by weight of the silicon-based active material.

6.  A method of manufacturing a negative electrode composition, the method comprising:

    surface-treating a silicon-based active material;
    heat-treating graphite to form a graphene oxide;
    mixing and heat-treating the surface-treated silicon-based active material and the graphene oxide to form a graphene wrapping a surface of the silicon-based active material; and
    mixing the silicon-based active material, a negative electrode conductive material, and a negative electrode binder,
    wherein the silicon-based active material comprises one or more selected from the group consisting of $SiO_x$ (x=0) and $SiO_x$ (0<x<2) and comprises 90 parts by weight or more of $SiO_x$ (x=0) on the basis of 100 parts by weight of the silicon-based active material.

7. The method of manufacturing a negative electrode composition of claim 6, comprising:

after mixing the silicon-based active material, a negative electrode conductive material, and a negative electrode binder, forming a negative electrode slurry by comprising a negative electrode slurry solvent in the mixture; and mixing the negative electrode slurry,
wherein the mixing of the negative electrode slurry is performed at 2,000 rpm to 3,000 rpm for 10 minutes to 60 minutes.

8. A negative electrode for a lithium secondary battery comprising:

a negative electrode current collector layer; and
a negative electrode active material layer comprising the negative electrode composition of any one of claims 1 to 5 and formed on one surface or both surfaces of the negative electrode current collector layer.

9. The negative electrode for a lithium secondary battery of claim 8, wherein a thickness of the negative electrode current collector layer is 1 um or greater and 100 um or less, and
wherein a thickness of the negative electrode active material layer is 20 um or greater and 500 um or less.

10. A lithium secondary battery comprising:

a positive electrode;
the negative electrode for a lithium secondary battery of claim 8;
a separator provided between the positive electrode and the negative electrode; and
an electrolyte.

[Figure 1]

[Figure 2]

<div align="center">

**INTERNATIONAL SEARCH REPORT**

</div>

| International application No. |
| --- |
| **PCT/KR2022/020888** |

| | |
| --- | --- |
| **A.** | **CLASSIFICATION OF SUBJECT MATTER** |

**H01M 4/1395**(2010.01)i; **H01M 4/1391**(2010.01)i; **H01M 4/36**(2006.01)i; **H01M 4/62**(2006.01)i; **H01M 4/38**(2006.01)i; **H01M 4/48**(2010.01)i; **H01M 4/134**(2010.01)i; **H01M 4/131**(2010.01)i; **H01M 10/052**(2010.01)i; **H01M 4/02**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H01M 4/1395(2010.01); C01B 32/168(2017.01); C01B 32/198(2017.01); H01M 4/04(2006.01); H01M 4/13(2010.01); H01M 4/139(2010.01); H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicon), 음극(anode), 도전재(conductive material), 바인더(binder), 그래핀 (graphene), 래핑(wrapping)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | US 10135063 B2 (NORTHWESTERN UNIVERSITY et al.) 20 November 2018 (2018-11-20) See abstract; claims 1 and 4; column 3, lines 1-3 and column 6 – column 7; and figure 1. | 1,5,8,10 |
| Y | | 2-4,6-7,9 |
| Y | KR 10-2017-0127240 A (LG CHEM, LTD.) 21 November 2017 (2017-11-21) See claims 1 and 15; and paragraphs [0078]-[0080] and [0094]. | 2-4,7,9 |
| Y | KR 10-2021-0118320 A (WOOSUK UNIVERSITY) 30 September 2021 (2021-09-30) See claim 1. | 6-7 |
| A | FU, R. et al. Graphene wrapped silicon suboxides anodes with suppressed Li-uptake behavior enabled superior cycling stability. Energy Storage Materials. 2020, vol. 35, pp. 317-326. See entire document. | 1-10 |

☑ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 April 2023** | **07 April 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/020888** |

**C.    DOCUMENTS CONSIDERED TO BE RELEVANT**

| Category* | Citation of document, with indication, where appropriate, of the relevant passages | Relevant to claim No. |
|---|---|---|
| A | LIU, N. et al. A Yolk-Shell Design for Stabilized and Scalable Li-Ion Battery Alloy Anodes. NANO LETTERS. 2012, vol. 12, pp. 3315-3321.<br>    See entire document. | 1-10 |

Form PCT/ISA/210 (second sheet) (July 2022)

INTERNATIONAL SEARCH REPORT
Information on patent family members

International application No.

**PCT/KR2022/020888**

| Patent document cited in search report | | | Publication date (day/month/year) | Patent family member(s) | | | Publication date (day/month/year) |
|---|---|---|---|---|---|---|---|
| US | 10135063 | B2 | 20 November 2018 | US | 2013-0344392 | A1 | 26 December 2013 |
| | | | | US | 2019-0157666 | A1 | 23 May 2019 |
| KR | 10-2017-0127240 | A | 21 November 2017 | None | | | |
| KR | 10-2021-0118320 | A | 30 September 2021 | KR | 10-2405622 | B1 | 03 June 2022 |

Form PCT/ISA/210 (patent family annex) (July 2022)

**EP 4 369 437 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210185220
- JP 2009080971 A